# EUROPEAN PATENT APPLICATION

(11) **EP 4 242 275 A1**
(43) Date of publication of application: **13.09.2023**
(21) Application number: 21889056.4
(22) Date of filing: 22.10.2021
(51) Int. Cl.: C09D 11/322, B41J 2/01, B41M 5/00, C09D 11/54

(54) **INK SET FOR PERMEABLE SUBSTRATES, AND IMAGE RECORDING METHOD**

(30) Priority: 06.11.2020 JP 2020186069
(71) Applicant: FUJIFILM Corporation, Tokyo 106-8620 (JP)
(72) Inventor: ITO, Orie, Ashigarakami-gun, Kanagawa 258-8577 (JP)
(74) Representative: Klunker IP Patentanwälte PartG mbB
(86) International application number: PCT/JP2021/039134
(87) International publication number: WO 2022/097503

(57) **Abstract**

Provided are an ink set for a permeable substrate containing an ink for an inkjet and a treatment liquid, in which the ink for an inkjet contains water, a water-soluble organic solvent, a pigment, a pigment dispersion resin, and a resin component (X) which is at least one of a water-soluble resin or resin particles, and the treatment liquid contains water, a water-soluble organic solvent, and an organic acid salt having a molecular weight of 130 or less; and an image recording method.

## Description

### BACKGROUND OF THE INVENTION

### 1. Field of the Invention

The present disclosure relates to an ink set for a permeable substrate and an image recording method.

### 2. Description of the Related Art

In recent years, a set including a combination of an ink containing a coloring material and a liquid other than the ink has been known.

The liquid other than the ink is referred to as a reaction liquid, a treatment liquid, or the like.

For example, JP2012-223975A discloses a set of an ink and a reaction liquid, capable of obtaining an image having a high image density and forming an image with suppressed transfer to another recording medium even in a short time after image formation, the set has a combination of an ink containing a pigment and a water-soluble resin and a reaction liquid with buffering capacity in an acidic region, in which the pigment is a self-dispersing pigment having a surface charge amount of 0.20 mmol/g or more, which is determined by colloidal titration, and the water-soluble resin is a copolymer having a unit derived from (meth)acrylic acid.

### SUMMARY OF THE INVENTION

A treatment liquid containing an acid (for example, the reaction liquid disclosed in JP2012-223975A) has a property of aggregating components in the ink (hereinafter, also referred to as "cohesive force"). By applying the treatment liquid and the ink to the recording medium, an improvement in image quality is expected based on the cohesive force of the treatment liquid.

However, according to the study of the present inventor, in a case where an image is recorded on a permeable substrate (for example, coated paper), it has been found that, in a case where the cohesive force of the treatment liquid is too high, streak-like defects (hereinafter, simply referred to as "streaks") may occur in the image. This tendency is particularly remarkable in a case where the recording medium on which the image is recorded is the permeable substrate such as coated paper.

Furthermore, in the study by the present inventor, it has been found that, in a case where the cohesive force of the treatment liquid is excessively weakened in an attempt to suppress the occurrence of streaks, bleeding of the image may occur.

The present disclosure has been made in consideration of the above-described circumstances.

An object of one aspect of the present disclosure is to provide an ink set for a permeable substrate and an image recording method, with which an image with suppressed streaks and bleeding can be recorded on a permeable substrate.

The specific methods for achieving the above-described object include the following aspects.
<1> An ink set for a permeable substrate, comprising:
   an ink for an ink jet; and
   a treatment liquid,
   in which the ink for an inkjet contains water, a water-soluble organic solvent, a pigment, a pigment dispersion resin, and a resin component (X) which is at least one of a water-soluble resin or resin particles, and
   the treatment liquid contains water, a water-soluble organic solvent, and an organic acid salt having a molecular weight of 130 or less.
<2> The ink set for a permeable substrate according to <1>,
   in which the resin component (X) contains the water-soluble resin.
<3> The ink set for a permeable substrate according to <2>,
   in which the water-soluble resin contains a water-soluble resin X1 containing an alkyl group having 1 to 3 carbon atoms, an anionic group, and a cyclic structure.
<4> The ink set for a permeable substrate according to <3>,
   in which the cyclic structure contains an aromatic ring.
<5> The ink set for a permeable substrate according to <3> or <4>,
   in which the water-soluble resin X1 contains a structural unit derived from a (meth)acrylic acid alkyl ester in which an alkyl group in an alkyl ester structure has 1 to 3 carbon atoms, a structural unit derived from (meth)acrylic acid, and a structural unit derived from a polymerizable monomer containing the cyclic structure.
<6> The ink set for a permeable substrate according to any one of <1> to <5>,
   in which a value obtained by dividing an acid value of the resin component (X) by a pKa of an organic acid corresponding to the organic acid salt having a molecular weight of 130 or less is 35 to 65.
<7> The ink set for a permeable substrate according to any one of <1> to <6>,
   in which the organic acid salt having a molecular weight of 130 or less is at least one selected from the group consisting of a formate, an acetate, and a lactate.
<8> The ink set for a permeable substrate according to any one of <1> to <7>,
   in which the water-soluble organic solvent in the treatment liquid includes an organic solvent S1 which is at least one selected from the group consisting of diethylene glycol monoalkyl ether, triethylene glycol monoalkyl ether, propylene glycol monoalkyl ether, dipropylene glycol, tripropylene glycol, and tripropylene glycol monoalkyl ether.
<9> An image recording method using the ink set for a permeable substrate according to any one of <1> to <8>, the image recording method comprising:
   a step of applying the treatment liquid onto a permeable substrate; and
   a step of applying the ink for an ink jet onto a region of the permeable substrate, to which the treatment liquid has been applied, by an ink jet method to record an image.
<10> The image recording method according to <9>,
   wherein the permeable substrate includes paper.
<11> The image recording method according to <9> or <10>,
   in which a water droplet contact angle of a surface of the permeable substrate, on which the image is recorded, is 70° or more after 3 seconds from applying water droplets.
<12> The image recording method according to any one of <9> to <11>,
   in which a ratio of an applied mass of the treatment liquid to an applied mass of the ink for an inkjet is 0.05 to 0.50 in the region on which the image is recorded.

According to the present disclosure, there are provided an ink set for a permeable substrate and an image recording method, with which an image with suppressed streaks and bleeding can be recorded on a permeable substrate.

### BRIEF DESCRIPTION OF THE DRAWINGS

Fig. 1 is a view conceptually showing character images used for an evaluation of bleeding of images in Examples.
Fig. 2 is a view for explaining details of an evaluation standard for the bleeding of images in Examples.

### DESCRIPTION OF THE PREFERRED EMBODIMENTS

In the present disclosure, the numerical ranges shown using "to" means ranges including the numerical values described before and after "to" as the minimum value and the maximum value.

In the present disclosure, in a case where a plurality of substances corresponding to each component in a composition is present, the amount of each component in the composition means the total amount of the plurality of substances present in the composition, unless otherwise specified.

In a numerical range described in a stepwise manner in the present disclosure, an upper limit value or a lower limit value described in a certain numerical range may be replaced with an upper limit value or a lower limit value in another numerical range described in a stepwise manner, or may be replaced with values shown in Examples.

In the present disclosure, the term "step" includes not only the independent step but also a step in which intended purposes are achieved even in a case where the step cannot be precisely distinguished from other steps.

The term "solid content" in the present disclosure means a component excluding a solvent, and a liquid component such as a low molecular weight component other than a solvent is also included in the "solid content" in the present specification.

The term "solvent" in the present disclosure is used to include water, an organic solvent, and a mixed solvent of water and an organic solvent.

In the present disclosure, either or both of acrylic and methacrylic may be referred to as "(meth)acrylic". For example, "(meth)acrylic acid" includes both acrylic acid and methacrylic acid.

In the present disclosure, either or both of acrylate and methacrylate may be referred to as "(meth)acrylate".

The weight-average molecular weight (Mw) in the present disclosure is measured by gel permeation chromatography (GPC).

With the gel permeation chromatography, HLC-8220GPC (manufactured by TOSOH CORPORATION) is used as the GPC, three columns, TSKgeL Super HZ2000, TSKgeL Super HZ4000, and TSKgeL Super HZ-H (all manufactured by TOSOH CORPORATION, 4.6 mm × 15 cm) are connected in series, and NMP (N-methylpyrrolidone) is used as an eluent. The sample concentration is 0.3% by mass, the flow rate is 0.35 ml/min, the sample injection amount is 10 µL, the measurement temperature is 40°C, and the refractive index (RI) detector (differential refractive index detector) is used as a detector. The calibration curve is prepared using 6 samples of "F-80", "F-20", "F-4", "F-2", "A-5000", and "A-1000", which are "Standard Sample TSK standard, polystyrene" manufactured by TOSOH CORPORATION.

In the present disclosure, the "ink set for a permeable substrate" means an ink set for recording an image on a permeable substrate as a recording medium.

### [Ink Set for Permeable Substrate]

The ink set for a permeable substrate according to the embodiment of the present disclosure contains an ink for an inkjet and a treatment liquid, in which the ink for an inkjet contains water, a water-soluble organic solvent, a pigment, a pigment dispersion resin, and a resin component X which is at least one of a water-soluble resin or resin particles, and the treatment liquid contains water, a water-soluble organic solvent, and an organic acid salt having a molecular weight of 130 or less.

Hereinafter, the ink set for a permeable substrate and the ink for an inkjet may be simply referred to as "ink set" and "ink", respectively.

With the ink set according to the embodiment of the present disclosure, an image with suppressed streaks and bleeding can be recorded on a permeable substrate.

The reason why such an effect is exhibited is presumed as follows.

As described above, according to the study of the present inventor, in a case where an image is recorded on a permeable substrate (for example, coated paper), it has been found that, in a case where the cohesive force of the treatment liquid is too high, streaks may occur in the image, and in a case where the cohesive force of the treatment liquid is excessively weakened, bleeding of the image may occur.

In the ink set according to the embodiment of the present disclosure, it is considered that the organic acid salt having a molecular weight of 130 or less in the treatment liquid functions as an aggregating agent which aggregates components in the ink (for example, the pigment, the resin component X, and the like).

In the ink set according to the embodiment of the present disclosure, by using the organic acid salt as the aggregating agent in the treatment liquid, compared to a case of not using the organic acid salt but using an organic acid, it is considered that excessively high cohesive force is suppressed, and as a result, streaks in the image are suppressed.

In the ink set according to the embodiment of the present disclosure, by using the organic acid salt having a molecular weight of 130 or less as the aggregating agent in the treatment liquid, compared to a case of not using the organic acid salt having a molecular weight of 130 or less but using an organic acid salt having a molecular weight of more than 130, it is considered that excessively weaken cohesive force is suppressed, and as a result, bleeding of the image is suppressed.

The ink set according to the embodiment of the present disclosure may contain only one kind of the above-described ink, or may contain two or more kinds thereof.

The ink set according to the embodiment of the present disclosure may contain only one kind of the above-described treatment liquid, or may contain two or more kinds thereof.

The ink set according to the embodiment of the present disclosure may contain a liquid other than the above-described ink and the above-described treatment liquid (for example, an ink other than the above-described ink and a treatment liquid other than the above-described treatment liquid).

As described above, the ink set according to the embodiment of the present disclosure is an ink set for recording an image on a permeable substrate as a recording medium.

Hereinafter, the permeable substrate which is the recording medium in the present disclosure will be described.

### <Permeable Substrate>

The ink set according to the embodiment of the present disclosure is used for image recording on a permeable substrate.

In the present disclosure, the permeable substrate refers to a substrate having a water absorption rate (unit: % by mass, measurement time: 24 hours) of 0.2 or more in ASTM D570 which is an ASTM test method.

From the viewpoint of further improving image quality of the image, the permeable substrate preferably has a water absorption coefficient Ka of 0.05 mL/m²·ms^{1/2} or more.

The water absorption coefficient Ka of the permeable substrate is more preferably 0.05 mL/m²·ms^{1/2} to 0.5 mL/m²·ms^{1/2}, still more preferably 0.1 mL/m²·ms^{1/2} to 0.4 mL/m²·ms^{1/2}, and even more preferably 0.2 mL/m²·ms^{1/2} to 0.3 mL/m²·ms^{1/2}.

The water absorption coefficient Ka is synonymous with that described in JAPAN TAPPI Pulp and Paper Test Method No. 51: 2000 (Published by Japan Technical Association of the Pulp and Paper). The absorption coefficient Ka is a value calculated from the difference in the amount of water transferred between a contact time of 100 ms and a contact time of 900 ms using an automatic scanning liquid absorptometer KM500Win (manufactured by KUMAGAI RIKI KOGYO Co., Ltd.).

The permeable substrate preferably includes paper.

In this case, the permeable substrate may be a permeable substrate only consisting of paper (for example, high-quality paper, alkaline paper, and the like), or may be a permeable substrate including paper and a coating layer (for example, art paper, coated paper, lightweight coated paper, fine coated paper, and the like).

The coating layer preferably contains an inorganic pigment.

The inorganic pigment is not particularly limited, but at least one selected from silica, kaolin, clay, calcined clay, zinc oxide, tin oxide, magnesium sulfate, aluminum oxide, aluminum hydroxide, pseudo-boehmite, calcium carbonate, heavy calcium bicarbonate, satin white, aluminum silicate, smectite, zeolite, magnesium silicate, magnesium carbonate, magnesium oxide, or diatomite is preferable, and calcium carbonate, heavy calcium bicarbonate, silica, or kaolin is more preferable.

A commercially available product may be used as the permeable substrate including paper.

Examples of the commercially available product include:
high-quality paper (A) such as "OK Prince High Quality" manufactured by Oji Paper Co., Ltd., "Shiraoi" manufactured by Nippon Paper Industries Co., Ltd., and "New NPI high-quality" manufactured by Nippon Paper Industries Co., Ltd.;
high-quality coated paper such as "Silver diamond" manufactured by Nippon Paper Industries Co., Ltd.;
fine coated paper such as "OK Everlight Coat" manufactured by Oji Paper Co., Ltd. and "Aurora S" manufactured by Nippon Paper Industries Co., Ltd.;
lightweight coated paper (A3) such as "OK Coat L" manufactured by Oji Paper Co., Ltd. and "Aurora L" manufactured by Nippon Paper Industries Co., Ltd.;
coated paper (A2, B2) such as "OK Top Coat +" manufactured by Oji Paper Co., Ltd. and "Aurora Coat" manufactured by Nippon Paper Industries Co., Ltd.;
art paper (A1) such as "OK Kanto+" manufactured by Oji Paper Co., Ltd. and "Tokubishi Art" manufactured by Mitsubishi Paper Mills Limited;
various photographic papers for inkjet recording;
"Bonivory" manufactured by Oji Paper Co., Ltd.;
"Calolina C2S" manufactured by International Paper;
"Carta Integra" manufactured by Metsaboard;
"VJFP series" manufactured by YUPO CORPORATION; and "MAGNO (registered trademark) Gross" which is coated paper manufactured by Sappi.

The permeable substrate may be a permeable substrate in which a water droplet contact angle of a surface on which the image is recorded is 70° or more after 3 seconds from applying water droplets.

In general, such a permeable substrate suppresses bleeding and can record an image having excellent accuracy, but may easily cause streaks in the image.

However, with the ink set according to the embodiment of the present disclosure, it is possible to record an image with suppressed streaks even on a permeable substrate in which the above-described water droplet contact angle is 70° or more.

The above-described water droplet contact angle can be measured using a contact angle meter in accordance with the method described in JIS R3257: 1999.

As the contact angle meter, for example, Drop Master DM700 (manufactured by Kyowa Interface Science Co., Ltd.) can be used.

The ink set according to the embodiment of the present disclosure may contain only one kind of the above-described ink, or may contain two or more kinds thereof.

The ink set according to the embodiment of the present disclosure may contain only one kind of the above-described treatment liquid, or may contain two or more kinds thereof.

The ink set according to the embodiment of the present disclosure may contain a liquid other than the above-described ink and the above-described treatment liquid (for example, an ink other than the above-described ink and a treatment liquid other than the above-described treatment liquid).

Hereinafter, the ink and the treatment liquid in the ink set according to the embodiment of the present disclosure will be described.

### <Ink>

The ink (that is, the ink for an inkjet) in the ink set according to the embodiment of the present disclosure contains water, a water-soluble organic solvent, a pigment, a pigment dispersion resin, and a resin component X which is at least one of a water-soluble resin or resin particles.

### (Water)

The ink in the present disclosure contains water.

A content of the water is not particularly limited, but is preferably 10% by mass or more, more preferably 30% by mass or more, and still more preferably 50% by mass or more with respect to the total amount of the ink.

The upper limit of the content of the water depends on contents of other components, but is, for example, 99% by mass, 90% by mass, 80% by mass, or the like.

### (Water-Soluble Organic Solvent)

The ink in the present disclosure contains at least one water-soluble organic solvent.

Accordingly, jettability from an ink jet head (hereinafter, also simply referred to as "jettability") is ensured.

In the present disclosure, the "water-soluble" in the water-soluble organic solvent means a property of being dissolved 5 g or more in 100 g of water at 20°C.

Examples of the water-soluble organic solvent include alkanediols (polyhydric alcohol) such as glycerin, 1,2,6-hexanetriol, trimethylolpropane, ethylene glycol, and propylene glycol; sugar alcohols; an alkyl alcohol having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, triethylene glycol monoethyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol, dipropylene glycol monomethyl ether, dipropylene glycol monoethyl ether, dipropylene glycol mono-n-propyl ether, dipropylene glycol mono-iso-propyl ether, and tripropylene glycol monomethyl ether; and amide compounds such as formamide, N,N-dimethylformamide, N,N-dimethylacetamide, 2-pyrrolidone, and N-methylpyrrolidone.

The water-soluble organic solvent can be used alone, or two or more thereof may be used in combination.

The water-soluble organic solvent preferably includes a first organic solvent having a boiling point of 110°C to 240°C. By including the first organic solvent in the water-soluble organic solvent, a content of the high boiling point solvent (for example, a second organic solvent having a boiling point of245°C to 300°C) can be relatively reduced. As a result, drying properties can be improved, and the stickiness of an image can be suppressed.

Examples of the first organic solvent having a boiling point of 110°C to 240°C include ethylene glycol (198°C), propylene glycol (188°C), dipropylene glycol (230°C), ethylene glycol monomethyl ether (124°C), ethylene glycol diethyl ether (162°C), propylene glycol monoethyl ether (120°C), dipropylene glycol dimethyl ether (171°C), diethylene glycol monomethyl ether (194°C), diethylene glycol diethyl ether (188°C), and N-methylpyrrolidone (202°C).

Examples of the second organic solvent having a boiling point of 245°C to 300°C include diethylene glycol (245°C), glycerin (290°C), 2-pyrrolidone (245°C), and triethylene glycol monomethyl ether (248°C).

As the first organic solvent and the second organic solvent, from the viewpoint of head maintainability, an alcohol-based organic solvent or an ether-based organic solvent is preferable. As compared with an amide-based organic solvent (for example, 2-pyrrolidone and the like) which easily interacts with the polymer component, since the alcohol-based organic solvent and the ether-based organic solvent are less likely to adhere to the inside of the ink jet head, the maintainability of the inkjet head is improved.

Specific examples of the alcohol-based organic solvent include ethylene glycol, propylene glycol, diethylene glycol, dipropylene glycol, and glycerin.

Examples of the ether-based organic solvent include alkyl ethers of ethylene glycol, propylene glycol, diethylene glycol, dipropylene glycol, and glycerin described above.

Specific examples of the ether-based organic solvent include alkyl ethers such as ethylene glycol monomethyl ether, ethylene glycol diethyl ether, propylene glycol monoethyl ether, dipropylene glycol dimethyl ether, diethylene glycol monomethyl ether, and diethylene glycol diethyl ether.

In the present disclosure, each of the first organic solvent and the second organic solvent is preferably at least one alcohol-based organic solvent selected from the group consisting of ethylene glycol, diethylene glycol, propylene glycol, triethylene glycol, dipropylene glycol, glycerin, and an alkyl ether thereof.

In a case where the water-soluble organic solvent includes the first organic solvent, a mass ratio (S²/S¹) of a content of the second organic solvent (S²) to a content of the first organic solvent (S¹) is preferably in a range of 0 to 0.3. In a case where S²/S¹ is within the above-described range, the amount of the organic solvent having a high boiling point is suppressed to a low level, so that the stickiness of an image after drying is suppressed.

S²/S¹ is more preferably in a range of 0 to 0.2 for the same reason as described above.

The ink in the present disclosure may contain an organic solvent other than the above-described water-soluble organic solvent as long as the effects in the present disclosure are not significantly impaired.

The total amount of the first organic solvent and the second organic solvent in the ink is preferably 5% by mass to 30% by mass with respect to the total amount of the ink.

In a case where the total amount of the first organic solvent and the second organic solvent is within the above-described range, the amount of the organic solvent is suppressed to a low level, so that the stickiness of an image after drying is suppressed. In addition, in a case where the total amount of the first organic solvent and the second organic solvent is 5% by mass or more, the occurrence of clogging of jetting holes due to the solidification of the ink generated at an air interface in the inkjet head is suppressed, which causes the satisfactory j ettability to be obtained.

For the same reason as described above, the total amount of the first organic solvent and the second organic solvent is more preferably in a range of 7.5% by mass to 40% by mass, and still more preferably in a range of 10% by mass to 30% by mass.

### (Pigment)

The ink in the present disclosure contains at least one pigment.

The pigment functions as a coloring material for coloring the ink.

Pigments include an organic pigment and an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable.

Examples of the azo pigment include an azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate, and an acid dye-type chelate.

Examples of the inorganic pigment include titanium oxide, iron oxide, calcium carbonate, barium sulfate, aluminum hydroxide, Barium Yellow, Cadmium Red, Chrome Yellow, and carbon black.

Specific examples of the pigment include pigments described in paragraphs 0142 to 0145 of JP2007-100071A.

A volume average particle diameter of the pigment is preferably 10 nm to 200 nm, more preferably 10 nm to 150 nm, and still more preferably 10 nm to 100 nm. In a case where the volume average particle diameter is 200 nm or less, satisfactory color reproducibility is obtained, and in a case where an image is recorded by an inkjet method, satisfactory jetting properties are obtained. In a case where the volume average particle diameter is 10 nm or more, satisfactory light resistance is obtained.

There are no particular limitations on the particle size distribution of the pigment in the ink, and the particle size distribution may be any one of a wide particle size distribution or a monodisperse particle size distribution. In addition, two or more pigments each having a monodisperse particle size distribution may be used as a mixture.

The volume average particle diameter and the particle size distribution of the pigment in the ink are values measured by a particle size distribution measuring device using light scattering (for example, Microtrac UPA (registered trademark) EX150 manufactured by Nikkiso Co., Ltd.).

A content of the pigment in the ink is not particularly limited and may be appropriately selected according to the purpose, application, and the like. From the viewpoint of colorability and storage stability, the content of the pigment in the ink is preferably 1% by mass to 20% by mass, and more preferably 1% by mass to 10% by mass with respect to the total amount of the ink.

### (Pigment Dispersion Resin)

The ink in the present disclosure contains at least one pigment dispersion resin.

The pigment dispersion resin covers a part or all of the surface of the pigment and functions as a dispersing agent for dispersing the pigment.

The pigment dispersion resin preferably contains at least one anionic group. As a result, dispersibility of the hydrophobic pigment can be further enhanced in the ink containing water and the water-soluble organic solvent.

Examples of the anionic group which can be contained in the pigment dispersion resin include an acid group (for example, a carboxy group, a sulfo group, a phosphoric acid group, and the like) and a salt of the acid group (for example, a salt of the carboxy group, a salt of the sulfo group, and a salt of the phosphoric acid group).

The anionic group which can be contained in the pigment dispersion resin may be used alone or in combination of two or more kinds thereof.

A preferred aspect of the anionic group which can be contained in the pigment dispersion resin is the same as a preferred aspect of the anionic group which can be contained in the water-soluble resin X1, which will be described later.

The anionic group in the pigment dispersion resin may be introduced into the structure of the pigment dispersion resin by polymerizing a polymerizable monomer containing an anionic group.

That is, the pigment dispersion resin may contain a structural unit derived from a polymerizable monomer containing an anionic group.

Specific examples of the structural unit derived from a polymerizable monomer containing an anionic group are shown below.

However, the structural unit derived from a polymerizable monomer containing an anionic group is not limited thereto.

Examples of the structural unit derived from a polymerizable monomer containing an anionic group also include structural units in which the acid group (for example, -COOH) in the structural unit of each specific example below is neutralized to form a salt of the acid group (for example, -COONa).

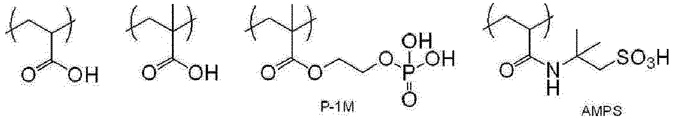

In addition, in the pigment dispersion resin covering a part or all of the surface of the pigment, a plurality of "structural units derived from a polymerizable monomer containing an anionic group" may be crosslinked with a crosslinking agent.

The pigment dispersion resin of such an aspect can be formed by, for example, dispersing the pigment with an uncrosslinked pigment dispersion resin containing the structural unit derived from a polymerizable monomer containing an anionic group, and then crosslinking the uncrosslinked pigment dispersion resin covering at least part of the pigment with a crosslinking agent (for example, see JP4964165B).

In a case where the pigment dispersion resin contains a structural unit derived from a polymerizable monomer containing an anionic group, from the viewpoint of pigment dispersibility, a content of the structural unit derived from a polymerizable monomer containing an anionic group is preferably 5% by mass to 40% by mass, and more preferably 8% by mass to 20% by mass with respect to the total amount of the pigment dispersion resin.

The pigment dispersion resin preferably contains an aromatic ring.

In a case where the pigment dispersion resin contains an aromatic ring, the pigment dispersion resin tends to be more hydrophobic. As a result, the pigment dispersion resin easily covers a part or all of the surface of the pigment, and stability of the pigment in water is further enhanced.

In the present disclosure the aromatic ring means a cyclic unsaturated ring having aromaticity.

Examples of the aromatic ring which can be contained in the pigment dispersion resin include:
aromatic hydrocarbon rings such as a benzene ring, a naphthalene ring, an anthracene ring, and a pyrene ring; and
heteroaromatic rings such as a pyridine ring, a pyrrole ring, a furan ring, a thiophene ring, an imidazolyl ring, and an acrydone ring.

Among these, an aromatic hydrocarbon ring is preferable.

The aromatic ring in the pigment dispersion resin may be introduced into the structure of the pigment dispersion resin by polymerizing a polymerizable monomer containing an aromatic ring. In other words, the pigment dispersion resin may contain a structural unit derived from a polymerizable monomer containing an aromatic ring.

As the polymerizable monomer containing an aromatic ring, a polymerizable monomer containing an aromatic ring and an ethylenically unsaturated double bond is preferable, and a vinyl polymerizable monomer containing an aromatic ring is more preferable.

Examples of the polymerizable monomer containing an aromatic ring include styrene, methylstyrene, divinylbenzene, vinylpyridine, diallyl phthalate, and the like, and (meth)acrylates containing an aromatic ring (for example, benzyl acrylate, phenoxyethyl acrylate, and the like).

The polymerizable monomer containing an aromatic ring may be unsubstituted, or may be a substituted polymerizable monomer substituted with a substituent. Examples of the substituent include a halogen atom, an alkyl group, a carboxylic acid group, a hydroxyl group, and the like.

Examples of the halogen atom include a chlorine atom, a bromine atom, and an iodine atom.

As the alkyl group, an alkyl group having 1 to 12 carbon atoms (preferably 1 to 8 carbon atoms) is preferable, and examples thereof include a methyl group, an ethyl group, a propyl group, a butyl group, hexyl, and the like. The alkyl group may be unsubstituted or may have a substituent same as the substituents described above.

Specific examples of the structural unit derived from a polymerizable monomer containing an aromatic ring are shown below. The present disclosure is not limited to the following specific examples. "*" in each structure indicates a bonding site. In addition, "iBu" represents isobutyl, "nBu" represents normal butyl, and "tBu" represents tertiary butyl.

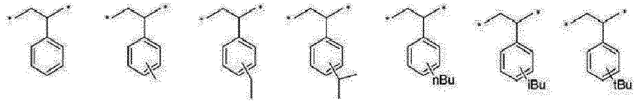

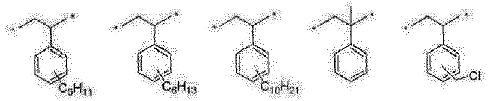

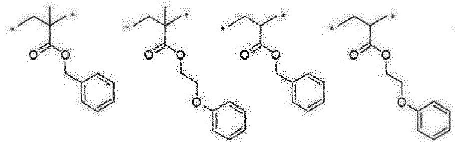

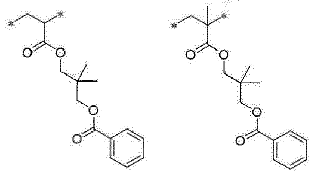

A content of the structural unit derived from a polymerizable monomer containing an aromatic ring is preferably 50% by mass to 85% by mass, and more preferably 60% by mass to 80% by mass with respect to the total amount of the pigment dispersion resin.

The pigment dispersion resin can contain a structural unit derived from a polymerizable monomer containing no aromatic ring, in addition to the structural unit derived from a polymerizable monomer containing an aromatic ring.

Suitable examples of the structural unit derived from a polymerizable monomer containing no aromatic ring can include alkyl (meth)acrylate.

As the alkyl (meth)acrylate, alkyl (meth)acrylate with an alkyl moiety having 1 to 20 carbon atoms is preferable. Examples of the alkyl (meth)acrylate include methyl (meth)acrylate, ethyl (meth)acrylate, butyl (meth)acrylate, stearyl (meth)acrylate, and the like.

Specific examples of the pigment dispersion resin include the following copolymers. A mass ratio of monomers in each copolymer can be appropriately selected within a range satisfying a range of a weight-average molecular weight. The present disclosure is not limited to the following specific examples.
- Benzyl methacrylate/acrylic acid copolymer
- Benzyl methacrylate/methacrylic acid copolymer
- Styrene/acrylic acid/stearyl acrylate copolymer
- Styrene/acrylic acid/stearyl methacrylate copolymer
- Benzyl methacrylate/methacrylic acid/stearyl methacrylate copolymer
- Phenoxyethyl methacrylate/methacrylic acid/stearyl methacrylate copolymer
- Phenoxyethyl methacrylate/methacrylic acid/stearyl methacrylate/hydroxyethyl methacrylate copolymer

From the viewpoint of the dispersibility and dispersion stability of the pigment, an acid value of the pigment dispersion resin is preferably 50 mgKOH/g to 180 mgKOH/g, more preferably 50 mgKOH/g to 150 mgKOH/g, and still more preferably 50 mgKOH/g to 120 mgKOH/g.

The acid value can be measured by titration of an indicator, and is a value measured by a method described in Japanese Industrial Standards (JIS) K0070: 1992.

A weight-average molecular weight (Mw) of the pigment dispersion resin is preferably 1,000 to 100,000, and more preferably 10,000 to 50,000.

From the viewpoint of obtaining satisfactory dispersibility of the pigment, a content of the pigment dispersion resin in the ink is preferably 10% by mass to 80% by mass and more preferably 25% by mass to 70% by mass with respect to the amount of the pigment.

### (Resin Component (X))

The ink in the present disclosure contains a resin component (X) which is at least one of a water-soluble resin or resin particles.

The resin component (X) may be at least one kind of resin particles, at least one kind of a water-soluble resin, or a combination of at least one kind of resin particles and at least one kind of a water-soluble resin.

In the image recording using the ink set according to the embodiment of the present disclosure, in a case where the ink is applied onto the region of the permeable substrate, to which the treatment liquid has been applied, the resin component (X) in the ink aggregates to thicken the ink. The thickening of the ink suppresses movement of ink droplets on the permeable substrate, and the image quality of the image can be ensured. For example, the accuracy of the image is further improved, and the bleeding of the image is further suppressed.

In the present disclosure, the "water-soluble" in the water-soluble resin means a property that the amount dissolved in 100 g of water at 25°C is 1 g or more. The "water-soluble" is preferably a property that the amount dissolved in 100 g of water at 25°C is 3 g or more (more preferably 10 g or more).

The resin particles are preferably particles including a water-insoluble resin.

The "water-insoluble" in the water-insoluble resin means a property that the amount dissolved in 100 g of water at 25°C is less than 1 g.

A content of the resin component (X) in the ink is preferably 1% by mass to 10% by mass with respect to the total amount of the ink.

In a case where the content of the resin B is 1% by mass or more, the thickening effect of the ink can be easily obtained.

In a case where the content of the resin B is 10% by mass or less, the jettability of the ink is further improved.

### -Water-Soluble Resin-

From the viewpoint of more effectively suppressing the streaks in the image, the resin component (X) preferably contains a water-soluble resin.

From the viewpoint of more effectively suppressing the streaks in the image, a proportion of the water-soluble resin in the total amount of the resin component (X) is preferably 50% by mass to 100% by mass, more preferably 60% by mass to 100% by mass, and still more preferably 80% by mass to 100% by mass.

### -Water-Soluble Resin X1-

In a case where the resin component (X) contains a water-soluble resin, the water-soluble resin preferably contains a water-soluble resin X1 containing an alkyl group having 1 to 3 carbon atoms, an anionic group, and a cyclic structure. As a result, adhesiveness between an image and a laminated substrate in a case where the laminated substrate is heat-fused onto the image (hereinafter, also referred to as "laminate suitability of the image") is further improved.

In a case where the water-soluble resin contains a water-soluble resin X1, a proportion of the water-soluble resin X1 in the total amount of the water-soluble resin is preferably 50% by mass to 100% by mass, more preferably 60% by mass to 100% by mass, and still more preferably 80% by mass to 100% by mass.

In a case where the water-soluble resin contains a water-soluble resin X1, a proportion of the water-soluble resin X1 in the total amount of the resin component (X) is preferably 50% by mass to 100% by mass, more preferably 60% by mass to 100% by mass, and still more preferably 80% by mass to 100% by mass.

### -Alkyl Group having 1 to 3 Carbon Atoms-

The alkyl group having 1 to 3 carbon atoms in the water-soluble resin X1 is a methyl group, an ethyl group, or a propyl group (that is, an n-propyl group or an i-propyl group), and a methyl group or an ethyl group is preferable and a methyl group is more preferable.

The water-soluble resin X1 may contain only one kind of the alkyl group having 1 to 3 carbon atoms, or may contain two or more kinds thereof.

The alkyl group having 1 to 3 carbon atoms in the water-soluble resin X1 may be introduced into the structure of the water-soluble resin X1 by polymerizing a polymerizable monomer containing an alkyl group having 1 to 3 carbon atoms.

That is, the water-soluble resin X1 may contain a structural unit derived from a polymerizable monomer containing an alkyl group having 1 to 3 carbon atoms.

As the polymerizable monomer containing an alkyl group having 1 to 3 carbon atoms, from the viewpoint of further improving the laminate suitability of the image, a (meth)acrylic acid alkyl ester in which an alkyl group in an alkyl ester structure has 1 to 3 carbon atoms [hereinafter, also referred to as "(meth)acrylic acid C1-3 alkyl ester"] is preferable.

Specifically, the (meth)acrylic acid C1-3 alkyl ester is methyl (meth)acrylate, ethyl (meth)acrylate, n-propyl (meth)acrylate, or i-propyl (meth)acrylate.

As the (meth)acrylic acid C1-3 alkyl ester, methyl (meth)acrylate or ethyl (meth)acrylate is preferable, and methyl (meth)acrylate is more preferable.

In addition, as the (meth)acrylic acid C1-3 alkyl ester, a methacrylic acid C1-3 alkyl ester is preferable.

In a case where the water-soluble resin X1 contains a (meth)acrylic acid C1-3 alkyl ester unit, the water-soluble resin X1 may contain one kind of the (meth)acrylic acid C1-3 alkyl ester unit, or two or more kinds thereof.

A content of the (meth)acrylic acid C1-3 alkyl ester unit in the water-soluble resin X1 is preferably 3% by mass to 80% by mass, more preferably 3% by mass to 50% by mass, and still more preferably 5% by mass to 50% by mass with respect to the total amount of the water-soluble resin X1.

### -Anionic Group-

Examples of the anionic group in the water-soluble resin X1 include an acid group (for example, a carboxy group, a sulfo group, a phosphoric acid group, and the like) and a salt of the acid group (for example, a salt of the carboxy group, a salt of the sulfo group, and a salt of the phosphoric acid group).

The anionic group contained in the water-soluble resin X1 may be used alone or in combination of two or more kinds thereof.

The water-soluble resin X1 may contain both the acid group and the salt of the acid group as the anionic group.

The salt of the acid group (for example, the salt of the carboxy group, the salt of the sulfo group, and the salt of the phosphoric acid group) can be formed by neutralizing the acid group (for example, the carboxy group, the sulfo group, and the phosphoric acid group) with a neutralizing agent.

The acid group may be neutralized before the polymerization of the polymerizable monomer containing an acid group, or after the polymerizable monomer is polymerized.

Examples of the neutralizing agent for neutralizing the acid group include inorganic bases such as an alkali metal hydroxide and an alkaline earth metal hydroxide, and organic bases such as an organic amine.

Examples of the alkali metal include potassium (K) and sodium (Na).

Examples of the alkaline earth metal include calcium (Ca) and magnesium (Mg).

Examples of the alkali metal hydroxides include potassium hydroxide, sodium hydroxide, and the like.

Examples of the alkaline earth metal hydroxides include calcium hydroxide and magnesium hydroxide.

Examples of the organic amines include ammonia, a primary amine (for example, ethylamine, monoethanolamine, and the like), a secondary amine (for example, diethylamine, ethylenediamine, and the like), and a tertiary amine (for example, triethylamine, triethanolamine, isopropylethylamine, pyrrolidine, piperidine, and the like), and a quaternary ammonium salt. Among these, as the organic amine, an organic amine having a boiling point of 80°C or higher is preferable from the viewpoint of storage stability.

From the viewpoint of the storage stability, the neutralizing agent is preferably an alkali metal hydroxide or an organic amine, and more preferably an alkali metal hydroxide or an organic amine having a boiling point of 80°C or higher.

Examples of the organic amine having a boiling point of 80°C or higher include ethylenediamine (117°C), triethylamine (90°C), monoethanolamine (170°C), triethanolamine (208°C), isopropylethylamine (127°C), and pyrrolidine (87°C), piperidine (106°C), and the like.

From the viewpoint of exhibiting the thickening action of the ink well and further suppressing the streaks in the image, the water-soluble resin X1 preferably contains, as the anionic group, at least one of a carboxy group or a salt of the carboxy group.

In this case, a proportion (% by mole; hereinafter, also referred to as a degree of neutralization) of the salt of the carboxy group to the total of the carboxy group and the salt of the carboxy group is preferably 40% by mole or more, more preferably 50% by mole or more, still more preferably 60% by mole or more, and even more preferably 80% by mole or more.

In addition, the upper limit of the degree of neutralization can be 100% by mole.

The anionic group which can be contained in the water-soluble resin X1 may be introduced into the structure of the water-soluble resin X1 by polymerizing a polymerizable monomer containing an anionic group (and, as necessary, neutralizing the polymerizable monomer with a neutralizing agent).

That is, the water-soluble resin X1 may contain a structural unit derived from a polymerizable monomer containing an anionic group.

As the polymerizable monomer containing an anionic group, (meth)acrylic acid is particularly preferable.

In a case where the water-soluble resin X1 contains a structural unit derived from a polymerizable monomer containing anionic group (for example, (meth)acrylic acid), a content of the structural unit derived from a polymerizable monomer containing anionic group is preferably 5% by mass to 40% by mass, and more preferably 8% by mass to 20% by mass with respect to the total amount of the water-soluble resin X1.

From the viewpoint of further improving the laminate suitability, the cyclic structure in the water-soluble resin X1 preferably contains at least one of an aromatic ring or an aliphatic ring, and more preferably contains an aromatic ring.

The water-soluble resin X1 may contain only one kind of the cyclic structure, or may contain two or more kinds thereof.

In the present disclosure the aromatic ring means a cyclic unsaturated ring having aromaticity.

Examples of the aromatic ring include:
aromatic hydrocarbon rings such as a benzene ring, a naphthalene ring, an anthracene ring, and a pyrene ring; and
heteroaromatic rings such as a pyridine ring, a pyrrole ring, a furan ring, a thiophene ring, an imidazolyl ring, and an acrydone ring.

Among these, an aromatic hydrocarbon ring is preferable.

In a case where the cyclic structure in the water-soluble resin X1 contains an aromatic ring, the aromatic ring can be introduced into the structure of the water-soluble resin X1 by polymerizing a polymerizable monomer containing an aromatic ring.

As the polymerizable monomer containing an aromatic ring, a polymerizable monomer containing an aromatic ring and an ethylenically unsaturated double bond is preferable, and a vinyl polymerizable monomer containing an aromatic ring is more preferable.

Examples of the polymerizable monomer containing an aromatic ring include styrene, methylstyrene, divinylbenzene, vinylpyridine, diallyl phthalate, and the like, and (meth)acrylates containing an aromatic ring (for example, benzyl acrylate, phenoxyethyl acrylate, and the like).

The polymerizable monomer containing an aromatic ring may be unsubstituted, or may be a substituted polymerizable monomer substituted with a substituent. Examples of the substituent include a halogen atom, an alkyl group, a carboxylic acid group, a hydroxyl group, and the like.

Examples of the halogen atom include a chlorine atom, a bromine atom, and an iodine atom.

As the alkyl group, an alkyl group having 1 to 12 carbon atoms (preferably 1 to 8 carbon atoms) is preferable, and examples thereof include a methyl group, an ethyl group, a propyl group, a butyl group, hexyl, and the like. The alkyl group may be unsubstituted or may have a substituent same as the substituents described above.

Specific examples of the structural unit derived from a polymerizable monomer containing an aromatic ring, which can be contained in the water-soluble resin X1, are the same as the specific examples of the structural unit derived from a polymerizable monomer containing an aromatic ring, which can be contained in the pigment dispersion resin described above.

A content of the structural unit derived from a polymerizable monomer containing a cyclic structure (for example, an aromatic ring) in the water-soluble resin X1 is preferably 50% by mass to 85% by mass, and more preferably 60% by mass to 80% by mass with respect to the total amount of the water-soluble resin X1.

From the viewpoint of further improving the laminate suitability of the image, it is particularly preferable that the water-soluble resin X1 contains
a structural unit derived from the (meth)acrylic acid C1-3 alkyl ester [that is, the (meth)acrylic acid alkyl ester in which the alkyl group in the alkyl ester structure has 1 to 3 carbon atoms],
a structural unit derived from (meth)acrylic acid, and
a structural unit derived from the polymerizable monomer containing a cyclic structure.

A preferred content of each structural unit in this aspect is as described above.

In the above-described aspect, the concept of "structural unit derived from (meth)acrylic acid" includes both the structural unit obtained by polymerizing (meth)acrylic acid (that is, structural unit containing a carboxy group) and the structural unit obtained by polymerizing and neutralizing (meth)acrylic acid (that is, structural unit containing a salt of the carboxy group) (here, the neutralization may be performed before or after polymerization).

A weight-average molecular weight of the water-soluble resin X1 is preferably 5,000 to 100,000. In a case where the weight-average molecular weight of the water-soluble resin X1 is within the above-described range, blurring and blocking of an image are further suppressed. In addition, the jettability of the ink is more excellent.

The weight-average molecular weight of the water-soluble resin X1 is more preferably 10,000 to 80,000 in terms of the jettability of the ink, and still more preferably 10,000 to 30,000.

An acid value of the water-soluble resin X1 is preferably 28 mgKOH/g to 230 mgKOH/g. In a case where the acid value is 230 mgKOH/g or less, the thickening effect of the ink can be easily obtained even in a case where a small amount of the water-soluble polymer is used, and the blurring in an image is suppressed. From the viewpoint of the thickening effect of the ink, the acid value is more preferably 50 mgKOH/g or more, and furthermore, may be 100 mgKOH/g or more or 150 mgKOH/g or more.

The acid value can be measured by titration of an indicator in the same manner as that of the pigment dispersion resin, and is a value measured by a method described in Japanese Industrial Standards (JIS) K0070: 1992.

In the present disclosure, in a case where the resin component (X) (for example, the water-soluble resin X1) is a neutralized resin, the acid value of the resin component (X) (for example, the water-soluble resin X1) means an acid value of the resin component (X) (for example, the water-soluble resin X1) as the neutralized resin.

A glass transition temperature (Tg) of the water-soluble resin X1 is preferably 80°C or higher. In a case where Tg is 80°C or higher, image blocking is further suppressed.

The Tg of the resin B is more preferably 95°C or higher and still more preferably 110°C or higher. In addition, the upper limit of Tg of the water-soluble resin X1 is preferably 250°C or lower in terms of synthesis suitability.

A sample obtained by drying a solution of the water-soluble resin X1 at 150°C under reduced pressure for 6 hours is prepared and measured at a heating rate of 10°C/min by using a differential scanning calorimeter (DSC) to obtain Tg. As the DSC, for example, a differential scanning calorimeter (DSC) DSC7000X manufactured by Hitachi High-Tech Science Corporation can be used.

In a case where the ink contains the water-soluble resin X1, from the viewpoint that it is easy to increase the dispersibility by covering a part or all of the surface of the pigment, it is preferable that the pigment dispersion resin has a more hydrophobic property than the water-soluble resin X1, that is, it is preferable that ClogP of the pigment dispersion resin is larger than ClogP of the water-soluble resin X1. The ClogP of the pigment dispersion resin is preferably 1.75 or more, more preferably 1.80 or more, and still more preferably 1.85 or more.

On the other hand, from the viewpoint that the water-soluble resin X1 is dissolved in the ink and effectively exhibits an action of thickening the ink applied onto the recording medium (that is, an effect of improving the image quality), it is preferable that the water-soluble resin X1 has a more hydrophilic property than the pigment dispersion resin A, that is, it is preferable that ClogP of the water-soluble resin X1 is lower than ClogP of the pigment dispersion resin A.

The ClogP of the resin B is preferably 1.80 or less, more preferably 1.74 or less, still more preferably 1.72 or less, and still more preferably 1.70 µm or less.

From the viewpoint of further improving the blocking resistance of the image and the jettability of the ink, the ClogP of the water-soluble resin X1 is still more preferably 0.90 to 1.50, even more preferably 0.95 to 1.45, and even still more preferably 0.97 to 1.43.

In a case where the ClogP of the water-soluble resin X1 is 0.90 or more, the blocking resistance of the image is further improved.

In a case where the ClogP of the water-soluble resin X1 is 1.50 or less, the jettability of the ink is further improved.

In the ink of the present disclosure, from the viewpoint of more effectively exhibiting the dispersion stability of the pigment and the thickening action (that is, the image quality improving effect) of the ink applied onto the recording medium, it is preferable that the ClogP of the pigment dispersion resin is 1.75 or more and the ClogP of the water-soluble resin X1 is 1.74 or less.

A ClogP of each resin is calculated as a weighted average of ClogP's of respective polymerizable monomers for forming the resin. For example, a ClogP of the polyacrylic acid is calculated as a ClogP of an acrylic acid, and a ClogP of a polyacrylic acid-polymethacrylic acid copolymer (copolymerization ratio = 50:50 [mass ratio]) is calculated such that each of the ClogP of acrylic acid and the ClogP of the methacrylic acid is multiplied by a mass ratio (in this case, each of which is 0.5) to obtain a total value, and the obtained total value is employed as the ClogP value of the polyacrylic acid-polymethacrylic acid copolymer (copolymerization ratio = 50:50 [mass ratio]).

As the ClogP's of respective polymerizable monomers, as described above, the ClogP that is calculated using ChemDraw (registered trademark) Professional (ver. 16.0.1.4) manufactured by PerkinElmer Informatics is used.

### -Resin Particles-

The resin component (X) may contain resin particles.

Here, the resin particles are distinguished from the pigment dispersion resin in terms that the resin particles are particles including a resin.

As described above, a water-insoluble resin is preferable as the resin constituting the resin particles.

As the resin particles, particles including an acrylic resin (hereinafter, also referred to as acrylic resin particles), particles including a polyester resin (hereinafter, also referred to as polyester resin particles), particles including a polyurethane resin (hereinafter, also referred to as polyurethane resin particles), or particles including a polyolefin resin (hereinafter, also referred to as polyolefin resin particles) are preferable.

In the present disclosure, the polyester resin means a polymer compound having an ester bond in the main chain. Examples of the polyester resin include a polycondensate of polyvalent carboxylic acid (such as dicarboxylic acid) and polyalcohol (such as a diol).

In the present disclosure, the polyolefin resin means a polymer (a homopolymer or a copolymer) of a raw material monomer containing an olefin. Examples of the polyolefin resin include a polymer of one kind of olefin, a copolymer of two or more kinds of olefins, and a copolymer of one or more kinds of olefins and one or more kinds of other monomers. Examples of the olefin include an α-olefin having 2 to 30 carbon atoms.

In the present disclosure, the polyurethane resin means a polymer compound having a urethane bond.

The resin particles preferably contain acrylic resin particles.

A ratio of the acrylic resin particles in the resin particles is preferably 60% by mass or more, more preferably 80% by mass or more, and still more preferably 90% by mass or more.

Examples of the resin particles include known resin particles described in paragraphs 0062 to 0076 of JP2016-188345A and paragraphs 0109 to 0140 of WO2013/180074A.

Preferred ranges of the weight-average molecular weight, acid value, and glass transition temperature of the resin constituting the resin particles are the same as the preferred ranges of the weight-average molecular weight, acid value, and glass transition temperature of the water-soluble resin X1, respectively.

### (Other Components)

The ink in the present disclosure may further contain other components in addition to the above-described components, as necessary.

Examples of other components include anti-drying agents (swelling agents), anti-coloring agents, penetration enhancer, ultraviolet absorbers, preservatives, rust inhibitors, antifoaming agents, viscosity adjusters, pH adjusters, and chelating agents.

### (Physical Properties of Ink)

A surface tension of the ink is not particularly limited and may be, for example, 20 mN/m or more. From the viewpoint of coatability on the recording medium, the surface tension is preferably 25 mN/m to 40 mN/m and more preferably 27 mN/m to 37 mN/m.

The surface tension of the ink is a value measured by a plate method using an Automatic Surface Tensiometer CBVP-Z (manufactured by Kyowa Interface Science Co., Ltd.) under a condition of 25°C.

### A pH (25°C ± 1°C) of the ink is preferably 6 to 10 and more preferably 7 to 10.

The pH is a value measured by using a pH meter (for example, WM-50EG manufactured by DDK-TOA CORPORATION) in a state in which a temperature of a treatment liquid is adjusted to 25°C in an environment of 25°C.

From the viewpoint of the jettability of the ink, and the like, a viscosity of the ink is preferably in a range of 1 mPa·s to 30 mPa·s, more preferably in a range of 1 mPa·s to 20 mPa·s, still more preferably in a range of 2 mPa·s to 15 mPa s, and particularly preferably in a range of 2 mPa·s to 10 mPa·s.

The viscosity means a value measured under the condition of 25°C. The viscosity can be measured by using, for example, VISCOMETER TV-22 (manufactured by TOKI SANGYO CO. LTD.).

### <Treatment Liquid>

The treatment liquid in the ink set according to the embodiment of the present disclosure contains water, a water-soluble organic solvent, and an organic acid salt having a molecular weight of 130 or less.

### (Water)

The treatment liquid in the present disclosure contains water.

A content of the water is not particularly limited, but is preferably 10% by mass or more, more preferably 30% by mass or more, and still more preferably 50% by mass or more with respect to the total amount of the treatment liquid.

The upper limit of the content of the water depends on a content of another component, but is, for example, 99% by mass, 90% by mass, 80% by mass, and the like.

### (Water-Soluble Organic Solvent)

The treatment liquid in the present disclosure contains at least one water-soluble organic solvent.

As a result, a surface tension of the treatment liquid is reduced, and application suitability (for example, coating suitability) of the treatment liquid is improved.

From the viewpoint of further suppressing image streaks and bleeding, it is more preferable that the water-soluble organic solvent in the treatment liquid includes an organic solvent S1 which is at least one selected from the group consisting of:
diethylene glycol monoalkyl ether (preferably, diethylene glycol monoalkyl ether in which an alkyl group in an alkyl ether structure has 1 to 6 carbon atoms (for example, diethylene glycol monobutyl ether));
triethylene glycol monoalkyl ether (preferably, triethylene glycol monoalkyl ether in which an alkyl group in an alkyl ether structure has 1 to 6 carbon atoms (for example, triethylene glycol monomethyl ether));
propylene glycol monoalkyl ether (preferably, propylene glycol monoalkyl ether in which an alkyl group in an alkyl ether structure has 1 to 6 carbon atoms (for example, propylene glycol monomethyl ether));
dipropylene glycol;
tripropylene glycol; and
tripropylene glycol monoalkyl ether (preferably, triethylene glycol monoalkyl ether in which an alkyl group in an alkyl ether structure has 1 to 6 carbon atoms (for example, tripropylene glycol monomethyl ether)).

The organic solvent S1 is a water-soluble organic solvent that is hydrophobic (that is, has a low solvent parameter (SP) value) as compared with alkylene glycol (for example, propylene glycol) which is another example of the water-soluble organic solvent. In a case where the water-soluble organic solvent in the treatment liquid contains such an organic solvent S1, as compared with a case where the water-soluble organic solvent in the treatment liquid does not contain the organic solvent S1 but contains alkylene glycol, it is considered that film quality of a film (that is, an image) formed for the ink is improved, and as a result, the streaks and bleeding of the image are further suppressed.

A proportion of the organic solvent S1 in the water-soluble organic solvent in the treatment liquid is preferably 50% by mass to 100% by mass, more preferably 60% by mass to 100% by mass, and still more preferably 80% by mass to 100% by mass.

A content of the water-soluble organic solvent in the treatment liquid is not particularly limited, but from the viewpoint of curl suppression, it is preferably 1% by mass to 30% by mass and more preferably 5% by mass to 15% by mass with respect to the total amount of the treatment liquid.

### (Organic Acid Salt having Molecular Weight of 130 or less)

The treatment liquid in the present disclosure contains at least one organic acid salt having a molecular weight of 130 or less.

As described above, the organic acid salt having a molecular weight of 130 or less functions as an aggregating agent which aggregates components in the ink (for example, the pigment, the resin component (X), and the like).

In a case where the treatment liquid contains an organic acid salt, as compared with a case where the treatment liquid does not contain an organic acid salt but contains an organic acid, excessive cohesive force for aggregating the components in the ink is suppressed, and as a result, the streaks in the image are suppressed.

In a case where the molecular weight of the organic acid salt is 130 or less, as compared with a case where the molecular weight of the organic acid salt is more than 130, insufficient cohesive force is suppressed, and as a result, the bleeding of the image is suppressed.

The molecular weight of the organic acid salt is preferably 80 or less.

As the organic acid salt having a molecular weight of 130 or less, an alkali metal salt is preferable, a sodium salt or a potassium salt is more preferable, and a sodium salt is most preferable.

From the viewpoint of more effectively obtaining the effects of suppressing the streaks in the image and the bleeding of the image, the organic acid salt having a molecular weight of 130 or less is preferably at least one selected from the group consisting of a formate, an acetate, and a lactate, more preferably at least one selected from the group consisting of sodium formate, potassium formate, sodium acetate, potassium acetate, sodium lactate, and potassium lactate, and most preferably sodium formate.

From the viewpoint of more effectively obtaining the effects of suppressing the streaks in the image and the bleeding of the image, a content of the organic acid salt having a molecular weight of 130 or less is preferably 1% by mass to 30% by mass, more preferably 2% by mass to 20% by mass, and still more preferably 3% by mass to 15% by mass with respect to the total amount of the treatment liquid.

From the viewpoint of more effectively obtaining the effects of suppressing the streaks in the image and the bleeding of the image, it is also preferable to adjust a balance between the acid value (mgKOH/g) of the resin component (X) in the ink and a pKa of an organic acid corresponding to the organic acid salt having a molecular weight of 130 or less in the treatment liquid.

Specifically, a value obtained by dividing the acid value of the resin component (X) by the pKa of the organic acid corresponding to the organic acid salt having a molecular weight of 130 or less (hereinafter, also referred to as "ratio [acid value/pKa]" is preferably 35 to 65.

In a case where the ratio [acid value/pKa] is 35 or more, the streaks in the image are more suppressed.

In a case where the ratio [acid value/pKa] is 65 or less, the bleeding of the image is more suppressed.

Here, the organic acid corresponding to the organic acid salt having a molecular weight of 130 or less means an organic acid having a structure in which a cation (for example, Na⁺ or K⁺) in the organic acid salt having a molecular weight of 130 or less is replaced with a proton (H⁺).

In a case where two or more kinds of components corresponding to the resin component (X) are present in the ink, as the acid value of the resin component (X) in the ratio [acid value/pKa], a weighted average value of acid values (mgKOH/g) based on content mass ratios of the respective components is adopted.

In a case where two or more kinds of organic acid salts having a molecular weight of 130 or less are present in the treatment liquid, as the pKa of the organic acid corresponding to the organic acid salt having a molecular weight of 130 or less in the ratio [acid value/pKa], a weighted average value of pKa's of the organic acid corresponding to the respective organic acid salts, based on content mass ratios of the respective organic acid salts, is adopted.

### (Other Components)

The treatment liquid in the present disclosure may contain components other than the above components.

Examples of the other components include an aggregating agent other than the organic acid salt having a molecular weight of 130 or less, an antifoaming agent, and a nitrogen-containing heterocyclic compound.

Examples of the aggregating agent other than the organic acid salt having a molecular weight of 130 or less include an organic acid, a polyvalent metal salt, a metal complex, and a cationic polymer.

Examples of the aggregating agent other than the organic acid salt having a molecular weight of 130 or less also include known aggregating agents described in WO2019/004485A, WO2019/150878A, and WO2019/163581A.

However, from the viewpoint of obtaining the effects of the ink set according to the embodiment of the present disclosure more effectively, a proportion of the organic acid salt having a molecular weight of 130 or less to all aggregating agents in the treatment liquid is preferably 50% by mass to 100% by mass, more preferably 60% by mass to 100% by mass, and still more preferably 80% by mass to 100% by mass.

However, from the viewpoint of obtaining the effects of the ink set according to the embodiment of the present disclosure more effectively, the total content of the aggregating agent other than the organic acid salt having a molecular weight of 130 or less (for example, at least one selected from the group consisting of an organic acid, a polyvalent metal salt, a metal complex, and a cationic polymer) in the treatment liquid is preferably less than 5% by mass, more preferably less than 2% by mass, and particularly preferably 0% by mass (that is, the treatment liquid not containing the aggregating agent other than the organic acid salt having a molecular weight of 130 or less) with respect to the total amount of the treatment liquid.

Examples of the antifoaming agent include a silicone-based compound (a silicone-based antifoaming agent) and a pluronic-based compound (a pluronic-based antifoaming agent). Among these, a silicone-based antifoaming agent is preferable. As the silicone-based antifoaming agent, a silicone-based antifoaming agent containing a polysiloxane structure is preferable.

As the antifoaming agent, a commercially available product on the market may be used, and examples thereof include BYK-012, 017, 021, 022, 024, 025, 038, 094 (all of which are manufactured by BYK Japan KK.), KS-537, KS-604, KM-72F (all of which are manufactured by Shin-Etsu Chemical Co., Ltd.), TSA-739 (manufactured by Momentive Performance Materials Japan GK), and OLFINE AF104 (manufactured by Nissin Chemical co., ltd.). Among these, the silicone-based antifoaming agents, BYK-017, 021, 022, 024, 025, 094, KS-537, KS-604, KM-72F, and TSA-739, are preferable, and from the viewpoint of jetting stability of ink, BYK-024 is particularly preferable.

In a case where the treatment liquid contains the antifoaming agent, a content of the antifoaming agent is preferably 0.0001% by mass to 1% by mass and more preferably 0.001% by mass to 0.1% by mass with respect to a total mass of the treatment liquid. In a case where the treatment liquid contains a silicone-based antifoaming agent as the antifoaming agent, it is preferable that the treatment liquid contains the silicone-based antifoaming agent in a silicone oil equivalent amount of 50 ppm to 200 ppm.

### (Physical Properties of Treatment Liquid)

A surface tension of the treatment liquid is not particularly limited and may be, for example, 20 mN/m or more. From the viewpoint of coatability on a material subjected to recording, the surface tension is preferably 20 mN/m to 60 mN/m and more preferably 25 mN/m to 45 mN/m.

The surface tension of the treatment liquid is a value measured by a plate method using an Automatic Surface Tensiometer CBVP-Z (manufactured by Kyowa Interface Science Co., Ltd.) under a condition of 25°C.

From the viewpoint of the aggregation rate of the ink, a pH of the treatment liquid (25°C ± 1°C) is in a range of preferably 7.0 or less, more preferably 1.0 to 7.0, still more preferably 2.0 to 6.5, and even more preferably 3.0 to 6.0.

The pH is a value measured by using a pH meter (for example, WM-50EG manufactured by DKK-TOA CORPORATION) in a state in which a temperature of a treatment liquid is adjusted to 25°C in an environment of 25°C.

From the viewpoint of the aggregation rate of the ink, a viscosity of the treatment liquid is preferably in a range of 1 mPa·s to 30 mPa·s, more preferably in a range of 1 mPa·s to 20 mPa·s, still more preferably in a range of 2 mPa·s to 15 mPa·s, and particularly preferably in a range of 2 mPa s to 10 mPa s.

The viscosity means a value measured under the condition of 25°C. The viscosity can be measured by using, for example, VISCOMETER TV-22 (manufactured by TOKI SANGYO CO. LTD.).

### [Image Recording Method]

In the image recording method according to the embodiment of the present disclosure, the above-described ink set according to the embodiment of the present disclosure is used, and the image recording method according to the embodiment of the present disclosure includes a step of applying the above-described treatment liquid onto the permeable substrate (hereinafter, also referred to as "treatment liquid applying step"), and a step of applying the above-described ink onto a region of the permeable substrate, to which the treatment liquid has been applied, by an inkjet method to record an image (hereinafter, also referred to as "ink applying step").

The image recording method according to the embodiment of the present disclosure may include other steps, as necessary.

In the image recording method according to the embodiment of the present disclosure, since the ink set according to the embodiment of the present disclosure is used, the same effects as the above-described effects of the ink set according to the embodiment of the present disclosure (that is, the effects that an image with suppressed streaks and bleeding can be recorded) can be obtained.

Hereinafter, each step in the image recording method according to the embodiment of the present disclosure will be described.

### <Treatment Liquid Applying Step>

The treatment liquid applying step is a step of applying the above-described treatment liquid onto the permeable substrate.

Preferred aspects of the permeable substrate and the treatment liquid are as described in the section of "Ink Set", respectively.

As a method for applying the treatment liquid onto the permeable substrate, a known liquid applying method can be used.

Examples of the known liquid applying method include a coating method, an ink jet method, and a dipping method.

Examples of the coating method include size press methods such as a spray coating method, a horizontal size press method, and a calender size press method; knife coating methods such as an air knife coating method; roll coating methods such as a gate roll coating method, a direct roll coating method, a reverse roll coating method, and a squeeze roll coating method; blade coating methods such as a bill blade coating method; bar coating methods such as a rod bar coating method; cast coating methods; gravure coating methods; curtain coating methods; die coating methods; and brush coating methods.

In addition, a coating method in which the coating amount is controlled by using a coating device provided with a liquid amount restriction member, such as a coating device described in JP1998-230201A (JP-H10-230201A) may be adopted.

The details of the inkjet method are the same as the details of the inkjet method which can be adopted to the step of applying the ink, which will be described later.

An applied mass (g/m²) of the treatment liquid per unit area is, for example, 0.1 g/m² to 10 g/m², preferably 0.5 g/m² to 6.0 g/m² and more preferably 1.0 g/m² to 4.0 g/m².

In the treatment liquid applying step, the treatment liquid applied onto the permeable substrate may be heated and dried.

Examples of a unit for heating and drying the pretreatment liquid include known heating units such as a heater, known blowing units such as a dryer, and units combining these.

Examples of the method for heating and drying the pretreatment liquid include a method of applying heat from a side of the permeable substrate opposite to the surface to which the treatment liquid has been applied using a heater or the like, a method of applying warm air or hot air to the surface of the permeable substrate to which the treatment liquid has been applied, a method of applying heat from the surface of the permeable substrate to which the treatment liquid has been applied or from a side of the permeable substrate opposite to the surface to which the treatment liquid has been applied using an infrared heater, and a method of combining a plurality of these methods.

The heating temperature during the heating and drying of the treatment liquid is preferably 35°C or higher, and more preferably 40°C or higher.

The upper limit of the heating temperature is not particularly limited, but for example, the upper limit can be 100°C, preferably 70°C and more preferably 60°C.

The time for heating and drying the ink is not particularly limited, but is preferably 0.5 seconds to 60 seconds, more preferably 0.5 seconds to 20 seconds, and particularly preferably 0.5 seconds to 10 seconds.

### <Ink Applying Step>

The ink applying step is a step of applying the above-described ink onto a region of the permeable substrate, to which the treatment liquid has been applied, by an inkjet method to record an image.

The way of jetting the ink in the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal inkjet method (BUBBLE JET (registered trademark)) of heating the ink, forming bubbles, and using generated pressure, and the like may be used.

As the inkjet method, particularly, an inkjet method as a method described in JP1979-59936A (JP-S54-59936A), in which an ink subjected to an action of thermal energy undergoes a sudden volume change, and the ink is jetted from a nozzle by the action force due to this state change, can be effectively used.

As the ink jet method, a method described in paragraphs 0093 to 0105 of JP2003-306623A can also be applied.

The way of using the inkjet head also includes a shuttle method of performing recording while a short serial head is allowed to scan in the width direction of the permeable substrate, and a line method of using a line head in which recording elements are arranged correspondingly to the entire range of one side of the permeable substrate.

By the line method, an image can be recorded on the entire surface of the permeable substrate by scanning the permeable substrate in a direction orthogonal to a direction in which the recording elements are arranged. In the line method, a transport system such as a carriage that allows the short head to perform scanning in the shuttle method is unnecessary. In addition, in the line method, as compared with the shuttle method, a carriage is not required to move, and a complicated scanning control with the permeable substrate is unnecessary, and only the permeable substrate moves. Therefore, according to the line method, an increase in the recording speed of an image is achieved as compared with the shuttle method.

The ink is preferably applied using an inkjet head having a resolution of 300 dpi or more (more preferably 600 dpi or more and still more preferably 800 dpi or more). Herein, dpi is an abbreviation for dot per inch, and 1 inch is 2.54 cm.

From the viewpoint of obtaining a high-definition image, the amount of liquid droplets of the ink jetted from nozzles of the inkjet head is preferably 1 picoliter (pL) to 10 pL and more preferably 1.5 pL to 6 pL.

In addition, from the viewpoint of suppressing unevenness of an image and improving a connection between continuous gradations, it is also effective to jet the ink by combining the different amounts of liquid droplets.

In the ink applying step, the ink applied onto the permeable substrate may be heated and dried.

Examples of a unit for heating and drying the ink include known heating units such as a heater, known blowing units such as a dryer, and units combining these.

Examples of the method for heating and drying the ink include a method of applying heat from a side of the permeable substrate opposite to the surface to which the ink has been applied using a heater or the like, a method of applying warm air or hot air to the surface of the ink to which the ink has been applied, a method of applying heat from the surface of the permeable substrate to which the ink has been applied or from a side of the permeable substrate opposite to the surface to which the ink has been applied using an infrared heater, and a method of combining a plurality of these methods.

The heating temperature during the heating and drying of the ink is preferably 35°C or higher, more preferably 40°C or higher, and still more preferably 50°C or higher.

The upper limit of the heating temperature is not particularly limited, but for example, the upper limit can be 150°C, preferably 140°C and more preferably 130°C.

The time for heating and drying the ink is not particularly limited, but is preferably 0.5 seconds to 60 seconds and more preferably 0.5 seconds to 20 seconds.

### <Applied Mass Ratio [Treatment Liquid/Ink]>

In the image recording method according to the embodiment of the present disclosure, an applied mass ratio [treatment liquid/ink] (that is, a ratio of the applied mass of the treatment liquid to the applied mass of the ink in the region on which the image is recorded) is preferably 0.01 to 0.80, more preferably 0.05 to 0.50, and still more preferably 0.08 to 0.50.

In a case where the applied mass ratio [treatment liquid/ink] is 0.01 or more, the bleeding of the image is further suppressed.

In a case where the applied mass ratio [treatment liquid/ink] is 0.80 or less, the streaks in the image are further suppressed.

### Examples

Hereinafter, examples of the present disclosure will be shown, but the present disclosure is not limited to the following examples.

In the following, unless otherwise specified, "parts" and "%" are based on mass.

In the following, "water" means ion exchange water unless otherwise specified.

### [Preparation of Resin Component (X)]

As a resin component (X) which is a component in the ink, the following water-soluble resin and resin particles were prepared.

### <Preparation of Solution of Water-Soluble Resin [MMA/MAA/IBOMA]>

A 500 mL three-neck flask equipped with a stirrer, a thermometer, a reflux condenser, and a nitrogen gas introduction pipe was charged with propylene glycol (35 g) and heated to 90°C under a nitrogen stream. A mixed solution obtained by mixing 5.55 g of V-601 (radical polymerization initiator; manufactured by FUJIFILM Wako Pure Chemical Corporation), 10.7 g of methacrylic acid (MAA), 69.3 g of methyl methacrylate (MMA), 20.0 g of isobornyl methacrylate (IBOMA, ClogP = 4.97), 1.63 g of dodecyl mercaptan, and 65.00 g of propylene glycol was added dropwise thereto at a constant rate under a dropwise addition condition in which the dropwise addition was completed in 2 hours. After completion of the dropwise addition of the mixed solution, a mixture was stirred for 1 hour. Subsequently, a mixed solution obtained by mixing 1.85 g of V-601 and 24.62 g of propylene glycol was added to the obtained reaction mixture, and the mixture was further stirred for 1.5 hours. After adding 120.21 g of propylene glycol to the obtained reaction mixture, 8.56 g of a 50% by mass sodium hydroxide aqueous solution (alkali metal hydroxide) was added dropwise thereto by using a dropping funnel, thereby obtaining a solution of a water-soluble resin [MMA/MAA/IBOMA] (concentration of solid contents: 30% by mass).

The water-soluble resin [MMA/MAA/IBOMA] had an acid value of 60 mgKOH/g, a ClogP of 1.40, a weight-average molecular weight (Mw) of 15,000, and a glass transition temperature (Tg) of 127°C.

### <Preparation of Solution of Water-Soluble Resin [MMA/MAA/St]>

A solution of a water-soluble resin [MMA/MAA/St] (concentration of solid contents: 30% by mass) was obtained in the same manner as the preparation of the solution of the water-soluble resin [MMA/MAA/IBOMA], except that MMA, MAA, and IBOMA in the preparation of the solution of the water-soluble resin [MMA/MAA/IBOMA] were changed to 70.0 g of methyl methacrylate (MMA), 10.7 g of methacrylic acid (MAA), and 19.7 g of styrene (St).

The water-soluble resin [MMA/MAA/St] had an acid value of 150 mgKOH/g, a ClogP of 0.97, a weight-average molecular weight (Mw) of 18,000, and a glass transition temperature (Tg) of 109°C.

### <Preparation of Solution of Water-Soluble Resin [C18MA/MAA/St]>

A solution of a water-soluble resin [C18MA/MAA/St] (concentration of solid contents: 30% by mass) was obtained in the same manner as the preparation of the solution of the water-soluble resin [MMA/MAA/IBOMA], except that MMA, MAA, and IBOMA in the preparation of the solution of the water-soluble resin [MMA/MAA/IBOMA] were changed to 20.0 g of stearyl methacrylate (C18MA), 45.0 g of methacrylic acid (MAA), and 35.0 g of styrene (St).

The water-soluble resin [C18MA/MAA/St] had an acid value of 120 mgKOH/g, a ClogP of 1.48, a weight-average molecular weight (Mw) of 21,000, and a glass transition temperature (Tg) of 97°C.

### <Preparation of Solution of Water-Soluble Resin [C18MA/MAA]>

A solution of a water-soluble resin [C18MA/MAA] (concentration of solid contents: 30% by mass) was obtained in the same manner as the preparation of the solution of the water-soluble resin [MMA/MAA/IBOMA], except that MMA, MAA, and IBOMA in the preparation of the solution of the water-soluble resin [MMA/MAA/IBOMA] were changed to 36.0 g of stearyl methacrylate (C18MA) and 64.0 g of methacrylic acid (MAA).

The water-soluble resin [C18MA/MAA] had an acid value of 100 mgKOH/g, a ClogP of 1.43, a weight-average molecular weight (Mw) of 17,000, and a glass transition temperature (Tg) of 93°C.

### <Preparation of Resin Particles [DCPMA/MMA/MAA]>

360.0 g of methyl ethyl ketone was put into a 2 L three-neck flask provided with a stirrer, a thermometer, a reflux condenser, and a nitrogen gas introduction pipe, and then heated to 75°C. While the temperature inside a reaction container was maintained at 75°C, a mixed solution consisting of 36.0 g of dicyclopentanyl methacrylate (DCPMA), 306.0 g of methyl methacrylate (MMA), 18.0 g of methacrylic acid (MAA), 72 g of methyl ethyl ketone, and 1.44 g of "V-601" (radical polymerization initiator; manufactured by FUJIFILM Wako Pure Chemical Corporation) was added dropwise thereto at a constant rate such that the dropwise addition was completed in 2 hours. After the dropwise addition was completed, a solution consisting of 0.72 g of "V-601" and 36.0 g of methyl ethyl ketone was added thereto and stirred at 75°C for 2 hours, a solution consisting of 0.72 g of "V-601" and 36.0 g of methyl ethyl ketone was then added thereto and stirred at 75°C for 2 hours, and the solution was heated to 85°C and continually stirred for another 2 hours. Next, 668.3 g of the polymerization solution was weighed, 388.3 g of isopropanol and 122.1 ml of a 1 mol/L NaOH aqueous solution were added thereto, and the temperature inside the reaction container was raised to 80°C. Next, 720.1 g of distilled water was added dropwise at a rate of 20 ml/min to disperse the water. Then, a solvent was distilled off by keeping the temperature inside the reaction container at 80°C for 2 hours, 85°C for 2 hours, and 90°C for 2 hours under atmospheric pressure. Thereafter, the pressure inside the reaction container was further reduced, and a total amount of 913.7 g of isopropanol, methyl ethyl ketone, and distilled water was distilled off, thereby obtaining an aqueous dispersion (emulsion) of resin particles [DCPMA/MMA/MAA] having a concentration of solid contents of 28.0% by mass.

The aqueous dispersion of the obtained resin particles [DCPMA/MMA/MAA] had a pH of 8.4, a volume average particle diameter of 80 nm, a weight-average molecular weight (Mw) of 50,000, and a Tg of 116°C.

A pH was measured at 25°C by adjusting the temperature of the aqueous dispersion of the resin particles [DCPMA/MMA/MAA] to 25°C and using a pH meter WM-50EG (manufactured by DKK-TOA CORPORATION). In addition, the volume average particle diameter of the resin particles [DCPMA/MMA/MAA] was measured using Microtrac UPA EX-150 (manufactured by Nikkiso Co., Ltd.).

### [Example 1]

### <Preparation of Cyan Pigment Dispersion Liquid 1>

### -Preparation of Pigment Dispersion Resin A-1-

44 g of methyl ethyl ketone was added to a 500 ml three-neck flask equipped with a stirrer and a cooling pipe, the mixture was heated to 72°C under a nitrogen atmosphere, and a solution obtained by dissolving 0.43 g of dimethyl 2,2'-azobisisobutyrate, 35 g of benzyl methacrylate (BzMA), 5 g of methacrylic acid (MAA), and 10 g of methyl methacrylate (MMA) in 25 g of methyl ethyl ketone is added dropwise thereto for 3 hours. After completion of the dropwise addition, a reaction was further carried out for 1 hour, a solution obtained by dissolving 0.21 g of dimethyl 2,2'-azobisisobutyrate in 1 g of methyl ethyl ketone was added, the temperature of the mixture was raised to 78°C, and the mixture was heated for 4 hours. The obtained reaction solution was reprecipitated twice in a large excess amount of hexane, and a precipitated resin was dried to obtain 43 g of a pigment dispersion resin A-1.

The pigment dispersion resin A-1 had an acid value of 65.4 mgKOH/g, a ClogP of 1.89, and a weight-average molecular weight (Mw) of 42,000.

### -Preparation of Cyan Pigment Dispersion 1-

10 parts of Pigment Blue 15:3 (phthalocyanine blue A220, manufactured by Dainichiseika Color&Chemicals Mfg.Co., Ltd.), 5 parts of the above-described pigment dispersion resin A-1, 42 parts of methyl ethyl ketone, and 5.5 parts of a 1 mol/L sodium hydroxide (NaOH) aqueous solution, and 87.2 parts of ion exchange water were mixed. The mixed liquid was dispersed by a beads mill using 0.1 mmϕ zirconia beads for 2 to 6 hours. Methyl ethyl ketone was removed from the obtained dispersion at 55°C under reduced pressure, and a part of water was further removed to obtain a cyan pigment dispersion 1 having a pigment concentration of 10.2% by mass.

### <Preparation of Ink>

By using the above-described cyan pigment dispersion 1 and the solution of the water-soluble resin [MMA/MAA/St], a mixed liquid was prepared by mixing various components to have the following composition. After the preparation, coarse particles were removed from the mixed liquid with a 5 µm filter to prepare a cyan ink C-1 as the ink.

The cyan ink C-1 had a viscosity of 4.1 mPa·s (25°C), a surface tension was 38.4 mN/m (25°C), and a pH was 8.9 (25°C).

### -Composition of Cyan Ink C-1-

· Cyan pigment (Pigment Blue 15:3, manufactured by Dainichiseika Color&Chemicals Mfg.Co., Ltd.)
   ... 3% by mass
· Pigment dispersion resin A-1
   ... 2% by mass
· Water-soluble resin [MMA/MAA/St] (resin component (X))
   ... 5% by mass (expressed in terms of solid contents)
· Propylene glycol (PG; manufactured by FUJIFILM Wako Pure Chemical Corporation)
   ... 20% by mass
· OLFINE E1010 (manufactured by Nissin Chemical co., ltd., nonionic surfactant)
   ... 1% by mass
· Water
   ... in an amount of total 100% by mass

### <Preparation of Treatment Liquid>

Each component in the following composition was mixed to obtain a treatment liquid.

The obtained treatment liquid had a viscosity of 4.5 mPa·s (25°C), a surface tension of 41.0 mN/m (25°C), and pH of 5.0 (25°C).

Each of the viscosity, surface tension, and pH was measured using a VISCOMETER TV-22 (manufactured by Toki Sangyo Co., Ltd.), an Automatic Surface Tensiometer CBVP-Z (manufactured by Kyowa Interface Science Co., Ltd.), and a pH meter WM-50EG (manufactured by DKK-TOA CORPORATION).

### -Composition of Treatment Liquid-

· DEGmBE (diethylene glycol monobutyl ether)
   ... 2% by mass
· Sodium formate (aggregating agent; organic acid salt having a molecular weight of 130 or less)
   ... 5% by mass
· Water
   ... in an amount of total 100% by mass

### <Ink Set>

As an ink set for the following image recording, an ink set which is a combination of the above-described ink and the above-described treatment liquid was prepared.

### <Image Recording>

As a permeable substrate, "MAGNO (registered trademark) Gross" which is coated paper manufactured by Sappi was prepared.

In the permeable substrate, a water droplet contact angle of a surface on which the image was recorded was 84° after 3 seconds from applying water droplets.

The above-described permeable substrate was fixed on a stage operating at 500 mm/sec, the above-described treatment liquid was applied onto the fixed permeable substrate with a wire bar coater to a coating amount of 1.7 g/m², and immediately after that, the treatment liquid was dried at 50°C for 2 seconds.

Next, a line head (printer head GELJET GX5000 manufactured by Ricoh Co., Ltd.) arranged at an angle with respect to a moving direction of the permeable substrate was used to jet and apply, in a solid image, the cyan ink C-1 onto a treatment liquid-applied surface of the permeable substrate under jetting conditions of a resolution of 1200 × 1200 dots per inch (dpi), a jetting amount of 2.4 picolitre (pL), and a stage speed of 635 mm/sec, thereby obtaining an undried cyan solid image having a size of 20 mm × 100 mm. Immediately after that, the permeable substrate is placed on a hot plate at 60°C in contact with a surface opposite to the image recording surface of the permeable substrate, and hot air at 120°C is blown onto the image recording surface for 10 seconds using a dryer to dry the undried solid image, thereby obtaining a solid image.

In a region where the solid image was recorded, the applied mass ratio [treatment liquid/ink] was 0.08 (see Table 1).

### <Evaluation>

The following evaluations were carried out on the above-described ink set and the above-described solid image.

The results are shown in Table 1.

### (Streaks in Image)

The solid image was observed visually and observed with an optical microscope (magnification: 50 times), and streaks in the image were evaluated based on the following evaluation standard.

### -Evaluation Standard for Streaks in Image-

5: streaks were not confirmed in the solid image by the visual observation, and it was confirmed that ink dots did not have gaps therebetween by the observation using an optical microscope (magnification: 50 times).
4: streaks were not confirmed in the solid image by the visual observation, and it was confirmed that ink dots had gaps therebetween by the observation using an optical microscope (magnification: 50 times), and the gap was 1/10 or less of the ink dot diameter.
3: streaks were not confirmed in the solid image by the visual observation, and it was confirmed that ink dots had gaps therebetween by the observation using an optical microscope (magnification: 50 times), and the gap was more than 1/10 and 1/3 or less of the ink dot diameter.
2: streaks were partially confirmed in the solid image by the visual observation.
1: streaks were entirely confirmed in the solid image by the visual observation.

### (Bleeding of Image)

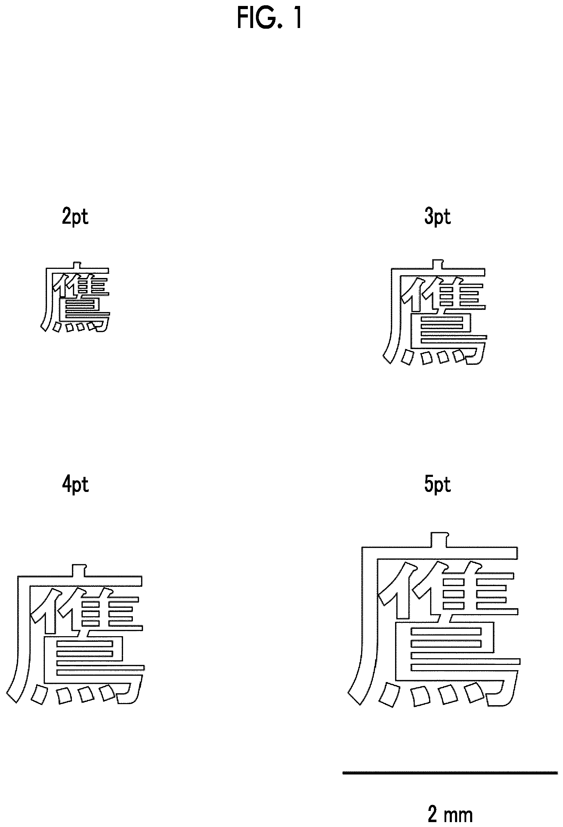

Character images (unicode: U+9DF9; 2 pt, 3 pt, 4 pt, and 5 pt) shown in Fig. 1 were recorded in the same manner as in "Image Recording" described above, except that the ink was applied in a form of a character image in place of the application of the ink in the form of the solid image.

The recorded character image was observed, and the bleeding of the image was evaluated based on the following evaluation standard.

The results are shown in Table 1.

In the following evaluation standard, the rank at which the bleeding of the image was most suppressed is "5".

### -Evaluation Standard for Bleeding of Image-

5: characters having a font size of 2 pt were able to be reproduced.
4: characters having a font size of 3 pt were able to be reproduced, but characters having a font size of 2 pt were not able to be reproduced.
3: characters having a font size of 4 pt were able to be reproduced, but characters having a font size of 3 pt or less were not able to be reproduced.
2: characters having a font size of 5 pt were able to be reproduced, but characters having a font size of 4 pt or less were not able to be reproduced.
1: characters having a font size of 5 pt were not able to be reproduced.

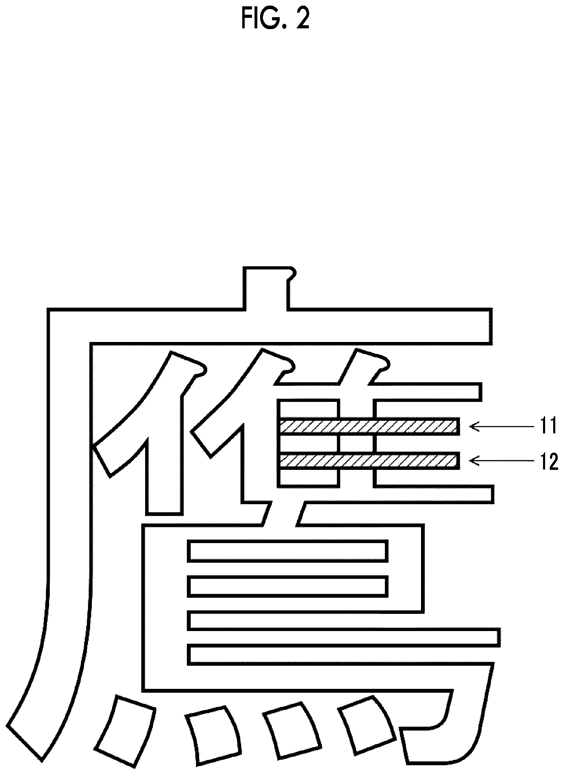

The above-described expression "was able to be reproduced" means that a horizontal line indicated by the reference numeral 11 in Fig. 2 and a horizontal line indicated by the reference numeral 12 in Fig. 2 are separated from each other in the character image of Fig. 1 as confirmed at a position separated by 0.5 m.

### (Laminate Suitability)

An image recording material including the permeable substrate and the solid image was obtained by performing the same operation as in "Image Recording" described above, except that the jetting amount of the cyan ink C-1 was changed to 6.0 pL.

A laminated layer having a thickness of 12 µm, which was made of low density polyethylene (LDPE), was formed on the solid image of the obtained image recording material by a melt laminating method to obtain a laminated sample.

The laminated sample was fixed to a tensile tester, and a part of the laminated layer on the solid image of the laminated sample was peeled off and attached to a grip of the tensile tester. Thereafter, a pulling operation was performed by pulling the laminated layer from the solid image in a direction of 180° peeling at a rate of 50 mm/min. A peel strength was determined from the maximum load during that period. In addition, in a case where the laminated layer was not peeled off from the solid image and the laminated layer was broken, the fact was recorded.

Based on the results of the above-described operations, the laminate suitability of the image was evaluated according to the following evaluation standard.

In the following evaluation standard, the rank at which the laminate suitability was most excellent is "5".

### -Evaluation standard for Laminate Suitability of Image-

5: laminated layer was not peeled off from the solid image, but the laminated layer was broken.
4: laminated layer was peeled off from the solid image, and the peel strength was in a range of 60 N/m or more.
3: laminated layer was peeled off from the solid image, and the peel strength was in a range of 40 N/m or more and less than 60 N/m.
2: laminated layer was peeled off from the solid image, and the peel strength was in a range of 20 N/m or more and less than 40 N/m.
1: laminated layer was peeled off from the solid image, and the peel strength was in a range of less than 20 N/m.

### [Examples 2 to 4]

The same operations as in Example 1 were carried out except that, by changing the applied mass of the treatment liquid, the applied mass ratio [treatment liquid/ink] was changed as shown in Table 1.

The results are shown in Table 1.

### [Examples 5 to 10]

The same operations as in Example 1 were carried out except that the type and/or amount of the aggregating agent (that is, the organic acid salt having a molecular weight of 130 or less) in the treatment liquid was changed as shown in Table 1.

The results are shown in Table 1.

### [Example 11]

The same operations as in Example 1 were carried out except that the type of the water-soluble organic solvent in the treatment liquid was changed as shown in Table 2.

The result is shown in Table 2.

### [Examples 12 to 15]

The same operations as in Example 1 were carried out except that the type of the resin component (X) in the ink was changed as shown in Table 2.

The result is shown in Table 2.

### [Comparative Examples 1 to 4]

The same operations as in Example 1 were carried out except that the aggregating agent (that is, the organic acid salt having a molecular weight of 130 or less) in the treatment liquid was changed to a comparative aggregating agent shown in Table 2, and the evaluation of the laminate suitability was not performed.

The result is shown in Table 2.

In Table 2, the notation "-" in the column of laminate suitability in Comparative Examples 1 to 4 means that the evaluation of laminate suitability was not performed.

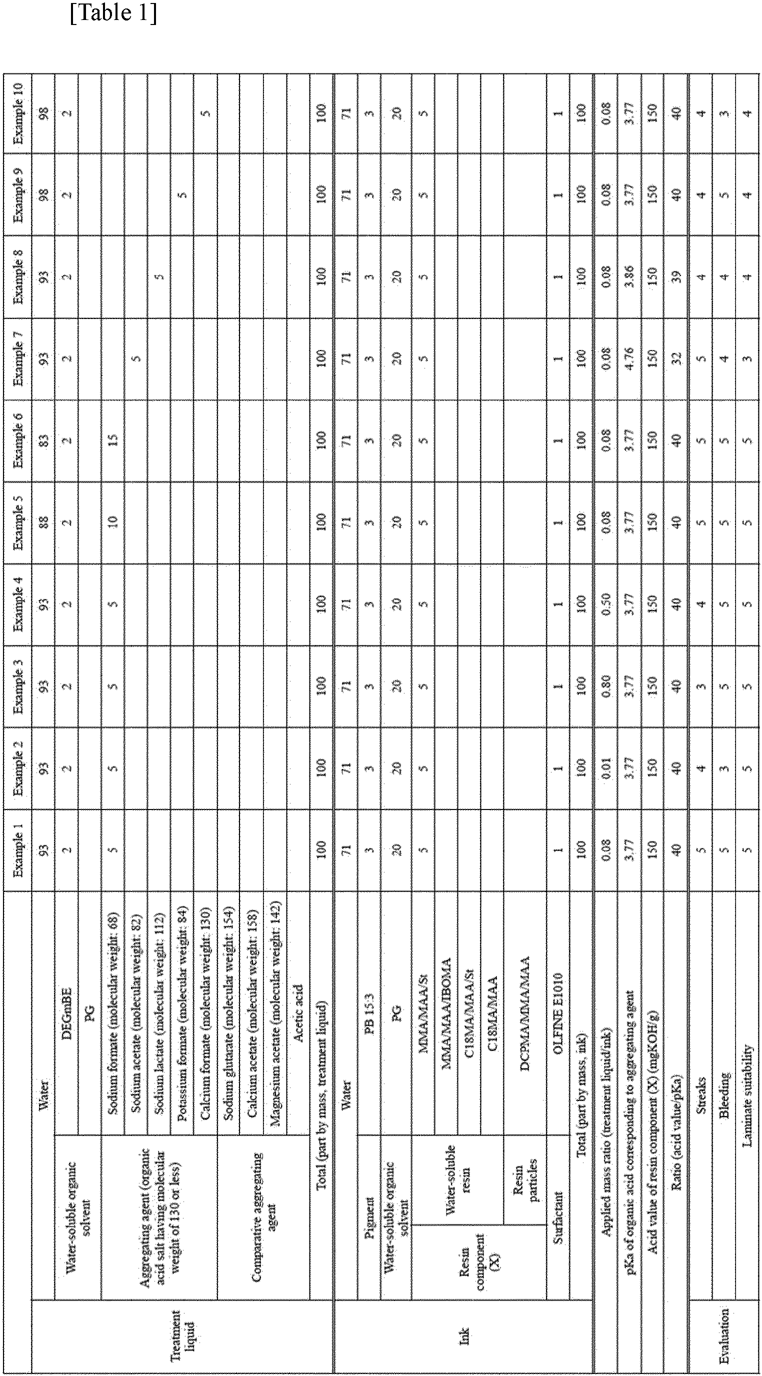

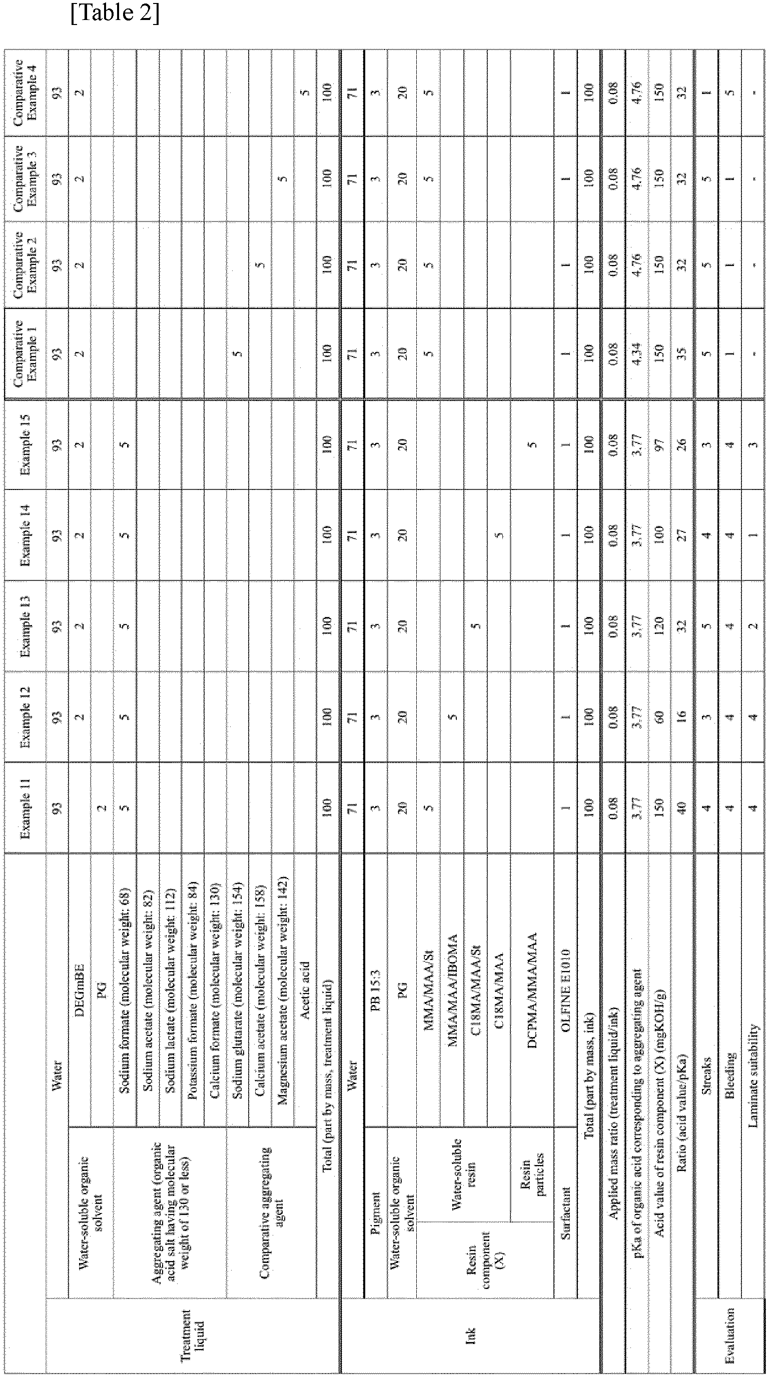

As shown in Table 1, in each example of using the ink set containing the ink and the treatment liquid, in which the ink contained water, the water-soluble organic solvent, the pigment, the pigment dispersion resin, and the resin component (X) which is at least one of a water-soluble resin or resin particles, and the treatment liquid contained water, the water-soluble organic solvent, and the organic acid salt having a molecular weight of 130 or less, the streaks and bleeding of the image were suppressed.

On the other hand, in Comparative Examples 1 to 3 in which, as the aggregating agent in the treatment liquid, a comparative aggregating agent having a molecular weight of more than 130 was used, the cohesive force was insufficient and the bleeding of the image occurred.

In addition, in Comparative Example 4 in which, as the aggregating agent in the treatment liquid, a comparative aggregating agent which is not an organic acid salt but an organic acid was used, the cohesive force was too strong and the streaks in the image occurred.

Among Examples 1, 5 to 11, and 13 to 15, in Examples 1, 5 to 11, 13, and 14 in which the resin component (X) in the ink contained a water-soluble resin, the streaks in the image were further suppressed.

Among Examples 13 and 14, in Example 13 in which the water-soluble resin in the ink contained a water-soluble resin X1 containing an alkyl group having 1 to 3 carbon atoms, an anionic group, and a cyclic structure (specifically, C18MA/MAA/St), the laminate suitability of the image was more excellent.

Among Examples 1 and 12, in Example 1 in which the cyclic structure in the water-soluble resin X1 contained an aromatic ring, the streaks in the image were further suppressed and the laminate suitability was more excellent.

Among Examples 11 and 13, in Example 11 in which the water-soluble resin X1 in the ink contained a structural unit "MMA/MAA/St" derived from a (meth)acrylic acid alkyl ester in which an alkyl group in an alkyl ester structure has 1 to 3 carbon atoms, the laminate suitability of the image was more excellent.

Among Examples 1 and 11, in Example 1 in which the water-soluble organic solvent in the treatment liquid contained an organic solvent S1 (specifically, DEGmBE including diethylene glycol monoalkyl ether), the streaks and bleeding of the image were suppressed, and the laminate suitability of the image was also excellent.

Among Examples 1 and 2, in Example 1 in which the applied mass ratio [treatment liquid/ink] was 0.05 or more, the bleeding of the image was further suppressed.

Among Examples 3 and 4, in Example 4 in which the applied mass ratio [treatment liquid/ink] was 0.50 or less, the streaks in the image were further suppressed.

The disclosure of JP2020-186069 filed on November 6, 2020 is incorporated in the present specification by reference.

All documents, patent applications, and technical standards described in the present specification are herein incorporated by reference to the same extent that each individual document, patent application, or technical standard was specifically and individually indicated to be incorporated by reference.

## Claims

1. An ink set for a permeable substrate, comprising:
an ink for an ink jet; and
a treatment liquid,
wherein the ink for an inkjet contains water, a water-soluble organic solvent, a pigment, a pigment dispersion resin, and a resin component (X) which is at least one of a water-soluble resin or resin particles, and
the treatment liquid contains water, a water-soluble organic solvent, and an organic acid salt having a molecular weight of 130 or less.

2. The ink set for a permeable substrate according to claim 1,
wherein the resin component (X) contains the water-soluble resin.

3. The ink set for a permeable substrate according to claim 2,
wherein the water-soluble resin contains a water-soluble resin X1 containing an alkyl group having 1 to 3 carbon atoms, an anionic group, and a cyclic structure.

4. The ink set for a permeable substrate according to claim 3,
wherein the cyclic structure contains an aromatic ring.

5. The ink set for a permeable substrate according to claim 3 or 4,
wherein the water-soluble resin X1 contains a structural unit derived from a (meth)acrylic acid alkyl ester in which an alkyl group in an alkyl ester structure has 1 to 3 carbon atoms, a structural unit derived from (meth)acrylic acid, and a structural unit derived from a polymerizable monomer containing the cyclic structure.

6. The ink set for a permeable substrate according to any one of claims 1 to 5,
wherein a value obtained by dividing an acid value of the resin component (X) by a pKa of an organic acid corresponding to the organic acid salt having a molecular weight of 130 or less is 35 to 65.

7. The ink set for a permeable substrate according to any one of claims 1 to 6,
wherein the organic acid salt having a molecular weight of 130 or less is at least one selected from the group consisting of a formate, an acetate, and a lactate.

8. The ink set for a permeable substrate according to any one of claims 1 to 7,
wherein the water-soluble organic solvent in the treatment liquid includes an organic solvent S1 which is at least one selected from the group consisting of diethylene glycol monoalkyl ether, triethylene glycol monoalkyl ether, propylene glycol monoalkyl ether, dipropylene glycol, tripropylene glycol, and tripropylene glycol monoalkyl ether.

9. An image recording method using the ink set for a permeable substrate according to any one of claims 1 to 8, the image recording method comprising:
a step of applying the treatment liquid onto a permeable substrate; and
a step of applying the ink for an ink jet onto a region of the permeable substrate, to which the treatment liquid has been applied, by an ink jet method to record an image.

10. The image recording method according to claim 9,
wherein the permeable substrate includes paper.

11. The image recording method according to claim 9 or 10,
wherein a water droplet contact angle of a surface of the permeable substrate, on which the image is recorded, is 70° or more after 3 seconds from applying water droplets.

12. The image recording method according to any one of claims 9 to 11,
wherein a ratio of an applied mass of the treatment liquid to an applied mass of the ink for an inkjet is 0.05 to 0.50 in the region on which the image is recorded.
